# EUROPEAN PATENT APPLICATION

(11) **EP 3 179 376 A1**
(43) Date of publication of application: **14.06.2017**
(21) Application number: 15829210.2
(22) Date of filing: 03.08.2015
(51) Int. Cl.: G06F 13/00, H04L 12/70, H04L 29/06, H04W 8/26, H04W 84/18

(54) **COMMUNICATION TERMINAL DEVICE AND TRANSMISSION/RECEPTION METHOD THEREFOR, AND RECORDING MEDIUM CONTAINING COMPUTER PROGRAM**

(30) Priority: 07.08.2014 JP 2014161006
(71) Applicant: NEC Corporation, Tokyo 108-8001 (JP)
(72) Inventor: UEDA, Hirofumi, Tokyo 108-8001 (JP); KINOSHITA, Shunichi, Tokyo 108-8001 (JP); YAMAGAKI, Norio, Tokyo 108-8001 (JP); NAKAJIMA, Kazuaki, Tokyo 108-8001 (JP)
(74) Representative: MacDougall, Alan John Shaw
(86) International application number: PCT/JP2015/003909
(87) International publication number: WO 2016/021180

(57) **Abstract**

Provided is a communication terminal device such that even in an environment with no communication management device for managing and controlling multiple communication terminal devices in a centralized manner, information can be effectively transmitted and received between the communication terminal devices, and load associated with reception processing can be reduced.

The communication terminal device (1) is equipped with: a reception control unit (3) for obtaining a reception port number on the basis of a first identifier (101) with which a first application can be identified; a filter unit (4) for setting the reception port number as a reception port used by the first application; and a transmission control unit (2) for obtaining a destination port number on the basis of a second identifier (102) with which a second application can be identified, said destination port number indicating the destination of a specific communication terminal device.

## Description

### [Technical Field]

The present invention relates to a technical field of transmitting and receiving information among a plurality of communication terminal devices. In particular, the present invention relates to a technical field of filtering the information to receive particular information.

### [Background Art]

In recent years, a mobile ad-hoc network (hereinafter called "MANET") has been attracting attention as a communication means for vehicle-to-vehicle communication and for areas lacking a network infrastructure or for times of disaster. A MANET is composed of a large number of communication terminal devices (nodes) connected to one another by wireless communication. For convenience of explanation, the communication terminal device is hereinafter simply called a "communication terminal".

Related arts existing prior to the present invention include, for example, PTL 1 and PTL 2.

PTL 1 discloses a technique related to a data communication method. The data communication method disclosed in PTL 1 includes transmitting information to nodes by using multicast communication. When transmitting the information, a source node adds an identifier for identifying a destination node to a data header. The source node transmits the information containing such the data header to the destination node.

In the communication system disclosed in PTL 2, communication is made between a client device and a server device. From the client device, the server device receives a program identifier for identifying an application running on the client device. The server device gives to the own device a port number for the application identified by the received program identifier. That is, the server device assigns the port number as a port number for the own device. The server device transmits information indicating the assigned port number to the client device. The client device uses the port number included in the received information to communicate with the server device.

### [Citation List]

### [Patent Literature]

[PTL 1] Japanese Unexamined Patent Application Publication No. 2009-260594
[PTL 2] Japanese Unexamined Patent Application Publication No. 2007-200209

### [Summary of Invention]

### [Technical Problem]

To share information among a plurality of communication terminals, the MANET has issues related to name resolution to be performed by the communication terminals. The name resolution refers to retrieving the Internet Protocol (IP) address given to the communication terminal, on the basis of some information that can identify the communication terminal. More specifically, for example, the application running on a specific communication terminal obtains through name resolution the IP address of another communication terminal, which is the communication counterpart, on the basis of an identifier that can identify the other communication terminal or the application running on the other communication terminal. The identifier may be, for example, a node identifier (an identifier may hereinafter be denoted as an "ID") that can identify the communication terminal, or a user ID that can identify the user of the communication terminal.

For example, in a wired environment where long-lasting network connection is assured, such as the Internet, the name resolution is provided as Domain Name System (DNS) services. In contrast, a large number of communication terminals constituting the MANET exchange information needed for name resolution among these communication terminals. The large number of communication terminals perform name resolution on the basis of the information exchanged among the communication terminals. In other words, such large number of communication terminals have to perform name resolution by themselves without using, for example, the DNS services.

For example, in case a network interrupt makes the communication terminal unable to communicate with the specific communication terminal that provides name resolution, the communication terminal can no longer tell the IP address of another communication terminal, which is the communication counterpart. In another example, under circumstances where IP addresses are periodically changed (i.e., automatic IP addressing), the communication terminal would acquire through name resolution the IP address before it is changed (i.e., the old IP address). As a result, applications running on these communication terminals can no longer communicate with each other.

A known technique to solve such problems is, for example, using application identifiers to communicate with each other without relying on IP addresses.

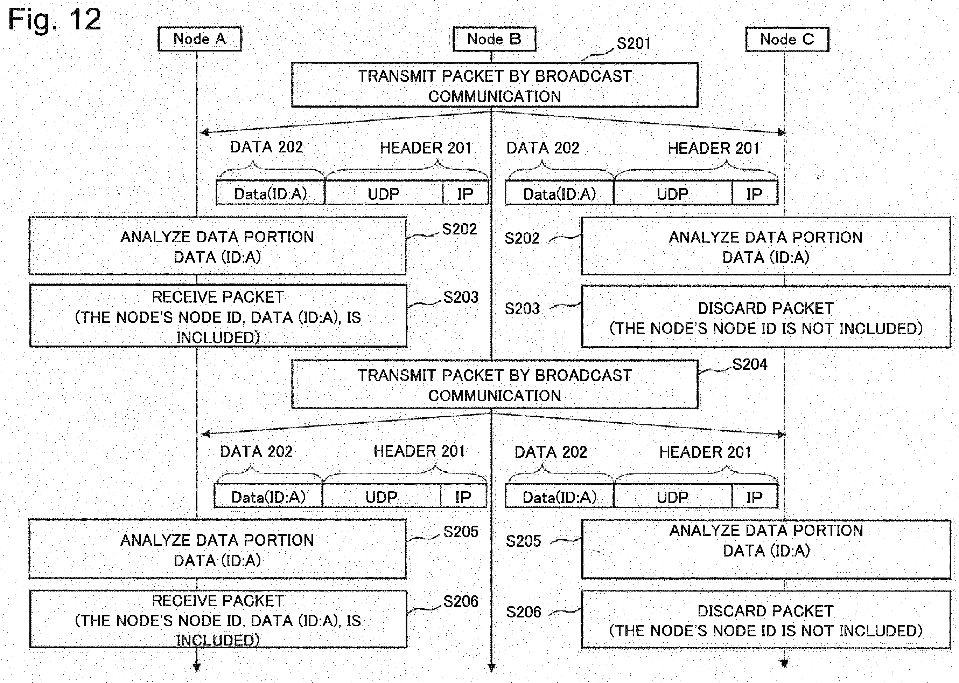

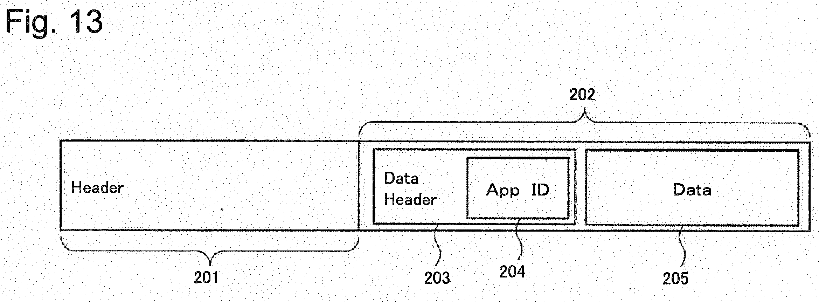

The following describes more specifically a known method of making communication by using application identifiers, referring to Figs. 12 and 13. Fig. 12 is an explanatory diagram illustrating a generally known method of making communication using application identifiers. Fig. 13 is a diagram conceptually exemplifying the format of a communication packet (hereinafter simply called a "packet" or "communication information") used for a generally known method of making communication using such identifiers.

With reference to Fig. 13, a communication packet includes a header field 201 and a data field 202 as main components. The data field 202 includes a data header 203, which contains an application ID (App ID in Fig. 13) 204 representing an application identifier, and data 205. The header field 201 includes an IP header and a User Datagram Protocol (UDP) header.

Fig. 12 illustrates processes performed when the specific communication terminal transmits the communication packet to other communication terminals. It is assumed that the specific communication terminal makes communication using a technique for transmitting and receiving the communication packet to/from a plurality of communication terminals simultaneously or substantially simultaneously (hereinafter simply referred to as "simultaneously"). The communication technique may be, for example, multiple addressing communication, broadcast communication, or multicast communication.

More specifically, with reference to Fig. 12, Node_B transmits the communication packet to Node_A and Node_C by, for example, broadcast communication (Step S201).

Each of applications running on Node_A and Node_C analyzes the received communication packet to find whether the packet is the information (data) addressed to the application itself. That is, the application analyzes the data header 203 included in the data field 202 on the basis of, for example, the node ID (the Application ID 204 in Fig. 13) that can identify the destination (Step S202).

The application receives the communication packet when it determines that the identifier of the application itself (the node ID) is written to the data header 203. That is, the application running on Node_A receives the communication packet. On the other hand, the application discards the communication packet when it determines that the identifier of the application itself is not written to the data header 203. That is, the application running on Node_C discards the communication packet (Step S203).

Processes from Step S204 to Step S206 are the same as those from Step S201 to Step S203. Thus, duplicate descriptions are omitted below.

The specific communication terminal can transmit and receive the communication packet to/from a plurality of communication terminals in this way. The involved application is, however, required to receive all the communication packets transmitted and received among the plurality of communication terminals. In addition, the application has to check the destination of the received communication packet. In other words, the application needs to identify whether the information is addressed to its own device, on the basis of the information indicating the destination written to the received communication packet. As a result, a greater load is imposed on the application.

PTL 1 states that the data header contains the identifier of the destination node, with no further descriptions. Hence, the data communication method disclosed in PTL 1 remains unable to reduce the load imposed on the application running on the node.

The client devices disclosed in PTL 2 make communication using port numbers given by the server device. This enables the communication system disclosed in PTL 2 to prevent port numbers from being divulged to third parties. Concerning a technique for efficiently communicating among a plurality of client devices, however, PTL 2 gives no consideration or description. Hence, the data communication system remains unable to reduce the load imposed on the application.

A primary object of the present invention is to provide the communication terminal device and the like that enable efficient transmission and reception of information among a plurality of communication terminal devices, and reduction in the load associated with a receiving process, even in an environment with no communication management device that manages and controls the communication terminal devices in a centralized manner.

### [Solution to Problem]

To solve the aforementioned problems, the communication terminal device according to an aspect of the present invention has the configuration described below.

A communication terminal device according to an aspect of the present invention includes:
reception control means for determining, on the basis of a first identifier that can identify a first application running on an own device, a reception port number for receiving first communication information from a specific communication terminal device, which is a communication counterpart;
filtering means for setting the reception port number obtained from the reception control means as a reception port for the first application; and
transmission control means for determining, on the basis of a second identifier that can identify a second application running on the specific communication terminal device, a destination port number indicating a destination in the specific communication terminal device,
   wherein the transmission control means
      controls communicating means so that the communicating means transmits, when transmitting second communication information to the specific communication terminal device, the second communication information being different from and other than the first communication information, the determined destination port number and the second communication information.

To achieve the objective, a transmission and reception method for a communication terminal device according to an aspect of the present invention has the configuration described below.

A transmission and reception method according to an aspect of the present invention includes:
determining, on the basis of a first identifier that can identify a first application running on a communication terminal device, a reception port number for receiving first communication information from a specific communication terminal device, which is a communication counterpart;
setting the obtained reception port number as a reception port for the first application;
determining, on the basis of a second identifier that can identify a second application running on the specific communication terminal device, a destination port number indicating a destination in the specific communication terminal device; and
controlling communicating means so that the communicating means transmits, when transmitting second communication information to the specific communication terminal device, the second communication information being different from and other than the first communication information, the determined destination port number and the second communication information.

The objective is also achieved by a computer program that implements with a computer the communication terminal device and the transmission and reception method therefor having the above-described configurations and by a computer-readable recording medium storing such computer program.

### [Advantageous Effects of Invention]

The present invention can provide a communication terminal device and the like that enable efficient transmission and reception of information among a plurality of communication terminal devices, and reduction in the load associated with a receiving process, even in an environment with no communication management device that manages and controls the communication terminal devices in a centralized manner.

### [Brief Description of Drawings]

Fig. 1 is a block diagram illustrating a configuration of a communication terminal device according to a first example embodiment of the present invention.
Fig. 2 is a diagram conceptually exemplifying the format of communication information containing an application ID according to the first example embodiment of the present invention.
Fig. 3 is a diagram conceptually exemplifying the format of communication information containing a multicast ID according to the first example embodiment of the present invention.
Fig. 4 is a block diagram illustrating a configuration of a communication terminal device according to a second example embodiment of the present invention.
Fig. 5 is a block diagram illustrating a configuration of a communication terminal device according to a third example embodiment of the present invention.
Fig. 6 is a diagram conceptually exemplifying operations of the individual communication terminal devices according to the third example embodiment of the present invention.
Fig. 7 is a flow chart illustrating operations for setting a reception port number performed by a communication terminal device according to the third example embodiment of the present invention.
Fig. 8 is a flow chart illustrating operations for transmitting communication information performed by a communication terminal device according to the third example embodiment of the present invention.
Fig. 9 is a flow chart illustrating operations for setting a destination port number performed by a communication terminal device according to the third example embodiment of the present invention.
Fig. 10 is a flow chart illustrating operations for receiving communication information performed by a communication terminal device according to the third example embodiment of the present invention.
Fig. 11 is a block diagram exemplifying a hardware configuration for an information processing apparatus that can implement each example embodiment according to the present invention.
Fig. 12 is an explanatory diagram illustrating a generally known method of making communication using application identifiers.
Fig. 13 is a diagram conceptually exemplifying the format of a communication packet used for a generally known method of making communication using application identifiers.

### [Description of Embodiments]

Example embodiments of the present invention will now be described in detail with reference to the drawings.

### First Embodiment

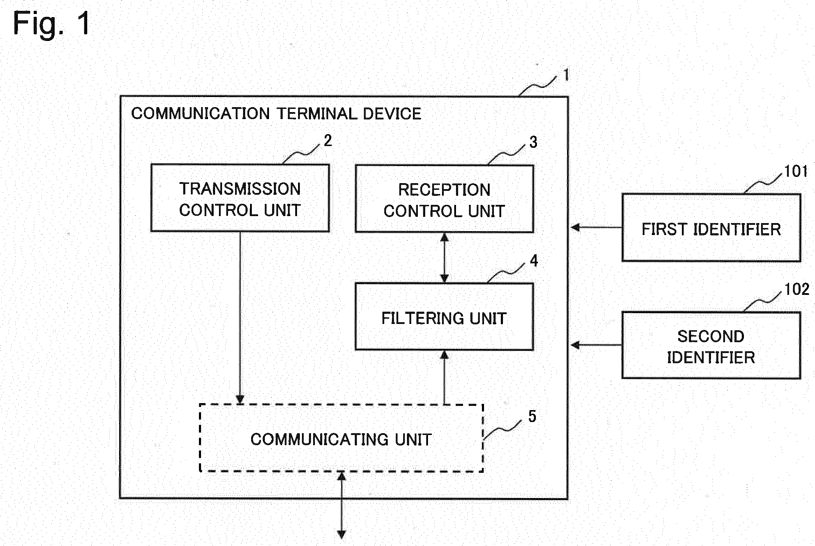

Fig. 1 is a block diagram illustrating a configuration of a communication terminal device 1 according to a first example embodiment of the present invention.

With reference to Fig. 1, the communication terminal device 1 includes a transmission control unit 2, a reception control unit 3, and a filtering unit 4.

For convenience of explanation, an application running on the communication terminal device 1 (the own device) is hereinafter called a "first application". An application running on another communication terminal (a specific communication terminal), which is the communication counterpart, is hereinafter called a "second application". For convenience of explanation, the communication terminal device 1, the communication terminal device 10, and the communication terminal device 20 appearing in the respective example embodiments may be called the own device. The direction indicated by an arrow in the drawings represents an example only, and thus it does not limit the direction of a signal between blocks (the same applies to other example embodiments below).

The transmission control unit 2 starts processing upon receipt of a second identifier 102 (a second application identifier) that can identify an application (a second application) running on the specific communication terminal, which is the communication counterpart.

On the basis of the second identifier 102 and information (data) included in the communication information (also denoted as "communication data" or a "communication packet") transmitted and received to/from another communication terminal, the transmission control unit 2 controls the communicating unit 5 so as to transmit communication information. That is, the transmission control unit 2 has a function to transmit communication information through the communicating unit 5.

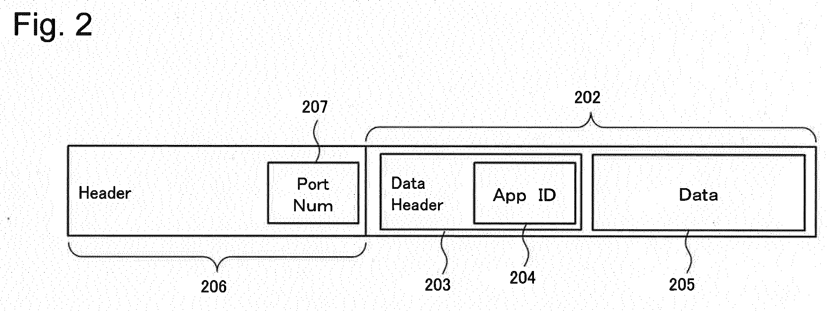

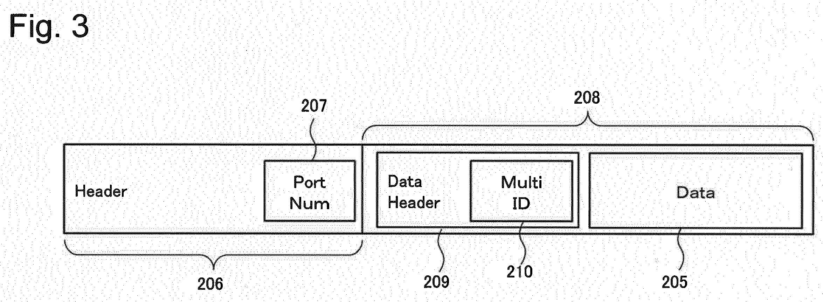

The information (first information) included in the communication information refers to actual data included in the communication information. That is, the first information corresponds to data 205 appearing in Figs. 2 and 3 as described below.

For convenience of explanation, the communication information received from the specific communication terminal is hereinafter called first communication information, while the communication information transmitted from the communication terminal device 1 is hereinafter called second communication information. For convenience of explanation, it is assumed that the information pieces represented by, for example, the first communication information and the second communication information are different from each other (the same applies to other example embodiments below).

On the basis of the second identifier 102, the transmission control unit 2 determines (calculates) a destination port number representing the destination in the specific communication terminal. More specifically, the transmission control unit 2 calculates the port number on the basis of the second identifier 102. The transmission control unit 2 notifies the communicating unit 5 of the calculated port number, as the destination port number indicating the destination in the specific communication terminal. Additionally, the transmission control unit 2 transmits first information to the communicating unit 5.

In this way, the transmission control unit 2 controls the communicating unit 5 so that the determined destination port number and the second communication information are transmitted to the specific communication terminal, which is the communication counterpart. In other words, the transmission control unit 2 controls the communicating unit 5 so that the destination port number and the second communication information are transmitted together to the specific communication terminal.

A destination port number also serves as a communication port number to be used by the application (the second application) running on the specific communication terminal. For example, if communicating between a plurality of communication terminals, the destination port number is following numbers. The destination port number is a unique destination port number that is determined for each second identifier 102 for each of the communication terminals, on the basis of the second identifier 102.

In one example, the transmission control unit 2 may adopt a configuration where a specific port number is calculated through the use of a means for determining a unique port number selected from a predetermined numerical range covering a plurality of port numbers. Alternatively, the transmission control unit 2 may adopt a configuration where the port number is calculated through the use of, for example, a hash function or a random function involving upper and lower limits, which is one of mathematical functions. In this case, the transmission control unit 2 may calculate the port number using, for example, the second identifier 102 as an input to the function. Alternatively, the transmission control unit 2 may adopt a configuration where the port number is determined by looking up one in a table indicating correspondence between second identifiers 102 that are provided in advance and their associated port numbers.

As seen above, the transmission control unit 2 can determine the destination port number based on the second identifier 102.

The calculated port number may not be necessarily unique to each second application. An objective of the present invention illustrated by the present example embodiment is to reduce the load imposed on the own device (the communication terminal device 1) when the device is receiving first communication information. Thus, the port number may be shared among as many applications as permissible to the extent that the load can be accepted. In this case, the communication terminal device 1 needs to determine whether to receive the first communication information that includes any duplicate port number. The determination of whether to receive the information can be achieved by adopting a configuration where an analyzing unit 13 makes the final determination, which will be described later in a second example embodiment.

The reception control unit 3 starts processing upon receipt of a first identifier 101 (a first application identifier) that can identify an application (a first application) running on the own device.

On the basis of the first identifier 101, the reception control unit 3 determines (calculates) a port number (a reception port number) used for the first application to receive the first communication information. In addition, the reception control unit 3 controls the filtering unit 4 so as to set up filtering that can be carried out on the basis of the determined reception port number. That is, the reception control unit 3 notifies the filtering unit 4 of the determined reception port number.

The reception port number, as used herein, refers to a communication port number used by the first application. For example, if communicating between among a plurality of communication terminals, the reception port number is following numbers. The reception port number is a unique reception number that is determined for each first identifier 101 for each of the own device and a plurality of communication terminals, on the basis of the first identifier 101.

The following describes identifiers (first identifier 101 and second identifier 102) in detail. If, for example, communication is made among a plurality of communication terminals, an adopted identifier may be a unique identifier specified for each of the applications running on the respective communication terminals.

More specifically, the identifier may be, for example, a user ID representing the name of the user using the application. Alternatively, the identifier may be a communication terminal ID or a node ID representing the computer name, or the Media Access Control (MAC) address or product model number given to the communication terminal. Alternatively, the identifier may be at least one of the aforementioned user name, computer name, MAC address, and product model number, or any combination thereof. In this way, information unique to an application running on each individual communication terminal can be adopted as an identifier.

As an identifier, information about the own device (the communication terminal) as obtained by an application running on the communication terminal may be used. Alternatively, as an identifier, information obtained by reading from a configuration file (hereinafter referred to as a "config file") that includes configuration information may be used.

It is assumed that the reception control unit 3 calculates the reception port number following a process similar to the process of calculating the port number performed by the transmission control unit 2. Thus, duplicate descriptions are omitted below.

The filtering unit 4 has a function to make a setting so as to receive the first communication information that includes the reception port number obtained from the reception control unit 3 in the form of the destination port number. The filtering unit 4 filters the first communication information that has been received by the communicating unit 5. Thus, the filtering unit 4 has a function to identify whether the first communication information is to be passed to the first application.

The following provides a detail description referring to Fig. 2. Fig. 2 is a diagram conceptually exemplifying the format of communication information (either of first and second communication information) that includes an application ID 204 according to the first example embodiment of the present invention.

With reference to Fig. 2, the communication information includes a header field 206 and the data field 202 as main components. The data field 202 includes the data header 203, which contains the application ID (e.g., App ID in Fig. 2) 204 representing an application identifier, and data 205. That is, the data header 203 includes the application ID 204 representing the destination of communication information.

The header field 206 includes a destination port number (e.g., Port Num in Fig. 2) 207. In other words, the header field 206 in Fig. 2 is different from the header field 201 described with reference to Fig. 13 as described below. In general, an identical port number is used between applications, but the present invention illustrated by the present example embodiment uses different port numbers (destination port number 207) between terminals.

More specifically, the filtering unit 4 checks the destination port number 207 written to the header field 206 that is included in the first communication information received by the communicating unit 5. When the checking results in determining that the destination port number 207 matches the reception port number assigned to the first application running on the own device, the filtering unit 4 transmits the first communication information to the reception control unit 3. Then, the reception control unit 3 may, for example, notify the first application of the first communication information provided by the filtering unit 4. Alternatively, the reception control unit 3 may, for example, notify an external device of the first communication information. Note that, however, the present invention illustrated by the present example embodiment is not limited to the configurations described above (the same applies to other example embodiments below).

On the other hand, when the filtering unit 4 determines that the destination port number 207 does not match the reception port number, the filtering unit 4 discards the first communication information.

Configuration for receiving first communication information may be achieved by, for example, opening a listen port for a transport protocol such as Transmission Control Protocol (TCP) or UDP.

Configuration for filtering first communication information may be achieved by, for example, using the firewall provided on the own device. In this case, the filtering may be configured so as not to discard communication information when the reception port number notified by the reception control unit 3 matches the destination port number 207 included in the received first communication information.

The communicating unit 5 generates second communication information using the destination port number and first information provided by the transmission control unit 2. The communicating unit 5 has a function to transmit the generated second communication information to the specific communication terminal, which is the communication counterpart.

The communicating unit 5 further has a function to deliver (transmit) first communication information to the filtering unit 4, upon receipt of the first communication information from the specific communication terminal.

More specifically, for transmitting second communication information, the communicating unit 5 generates the second communication information by adding (writing) the destination port number notified by the transmission control unit 2 to the header field (e.g., the header field 206 in Fig. 2) in the second communication information. If, for example, the second communication information is to be conveyed among a plurality of communication terminals, the communicating unit 5 transmits the second communication information to the plurality of communication terminals so that the information can be received by these terminals simultaneously.

The aforementioned header field is composed of header information in a layer lower than the application layer where a data field (e.g., the data field 202 in Fig. 2) is created. For example, for broadcast communication with UDP, which allows for simultaneous transmission to a plurality of communication terminals, the header field is composed of a UDP header and the IP header. Alternatively, for a communication method other than broadcast communication, the header field may be composed of headers used for the communication method. By way of more specific example, if the broadcast communication with IP communication is adopted, the communicating unit 5 may write the destination port number to the field indicating a destination port in the UDP header.

Concerning a technique for the communicating unit 5 to generate second communication information based on a destination port number and first information, generally available techniques can now be used, and thus detail descriptions of these techniques are omitted in the present example embodiment (the same applies to other example embodiments below).

The present example embodiment has been described above with an example configuration adopting the identifiers (first identifier 101 and second identifier 102) that can identify applications running on the own device and the specific communication terminal, which is the communication counterpart. In other words, the described example configuration adopts application identifiers. However, example embodiments of the present invention are not limited to such configuration. Another possible configuration adopts an identifier (a multicast identifier) that can identify a multicast group to which applications running on the own device and the specific communication terminal belong.

In this case, the transmission control unit 2 may perform the above-described processes upon receipt of a second identifier 102 (a second multicast identifier), which can identify the multicast group to which an application running on the specific communication terminal belongs. Likewise, the reception control unit 3 may perform the above-described processes upon receipt of the first identifier 101 (a first multicast identifier), which can identify the multicast group to which an application running on the own device belongs. In this way, the communication terminal device 1 according to the present example embodiment can perform processing for a configuration adopting multicast identifiers in a similar manner to that with application identifiers.

A multicast identifier (either of the first multicast identifier and the second multicast identifier) as used herein refers to an identifier shared by one or more applications running on a plurality of communication terminals that belong to the multicast group. More specifically, the multicast identifier may be, for example, a group ID that can identify a multicast address, a multicast name, and the multicast group. The multicast identifier may be, for example, at least one of the following information items or any combination thereof to avoid duplicate information among applications running on the individual communication terminals:
- multicast address;
- multicast name; and
- group ID.

In this way, the multicast identifier is generated on the basis of, for example, the multicast group ID configured on a wireless interface. A configuration with multicast identifiers is different from that with application identifiers in that a multicast identifier is shared (used in common) by a plurality of applications.

The following describes in detail the communication information (first and second communication information) containing a multicast ID referring to Fig. 3. Fig. 3 is a diagram conceptually exemplifying the format of communication information containing a multicast ID 210 according to the first example embodiment of the present invention.

The communication information illustrated in Fig. 3 includes the header field 206 and a data field 208 as main components. The data field 208 includes a data header 209, which contains a multicast ID (e.g., Multi ID in Fig. 3) 210 and data 205. That is, the data header 209 includes the multicast ID 210 representing the destination of communication information. The header field 206 includes the destination port number 207 (e.g., Port Num 207 in Fig. 3). In other words, the data header 209 in Fig. 3 is different from the data header 203 described with reference to Fig. 2 in that a multicast ID 210 is included in place of an application identifier.

Even when multicast communication is used, the communicating unit 5 still generates second communication information based on the destination port number and first information received from the transmission control unit 2. The communicating unit 5 can then transmit the generated second communication information to the specific communication terminal.

As described above, the communication terminal device 1 according to the present example embodiment can efficiently transmit and receive information among a plurality of communication terminal devices and reduce the load associated with a receiving process, even in an environment with no communication management device that manages and controls the communication terminal devices in a centralized manner. Reasons therefor are described below.

One reason is that the communication terminal device 1 includes the reception control unit 3 and the filtering unit 4, where the reception control unit 3 determines a unique reception port number for each application running on the own device, while the filtering unit 4 sets the obtained reception port number. As a result, the communication terminal device 1 can only receive the first communication information that includes the determined reception port number in the form of the destination port number. Another reason is that the communication terminal device 1 includes the transmission control unit 2. For transmitting second communication information, the transmission control unit 2 determines a unique destination port number for each application running on the specific communication terminal, which is the destination terminal. Then, the transmission control unit 2 controls the communicating unit 5 so that the destination port number and the second communication information are transmitted together. As a result, the plurality of terminal devices can efficiently transmit and receive information to/from one another. In addition, the relevant application can obtain the first communication information it needs without determining whether the transmitted information is addressed to the application itself running on the own device. In other words, the communication terminal device 1 can reduce the load imposed on each relevant application when the application receives the first communication information.

### Second Embodiment

A second example embodiment based on the communication terminal device 1 according to the first example embodiment of the present invention will now be described. The following description focuses on characteristics of the present example embodiment. Duplicate descriptions are thus omitted, with identical reference numbers given to components similar to those in the foregoing example embodiment.

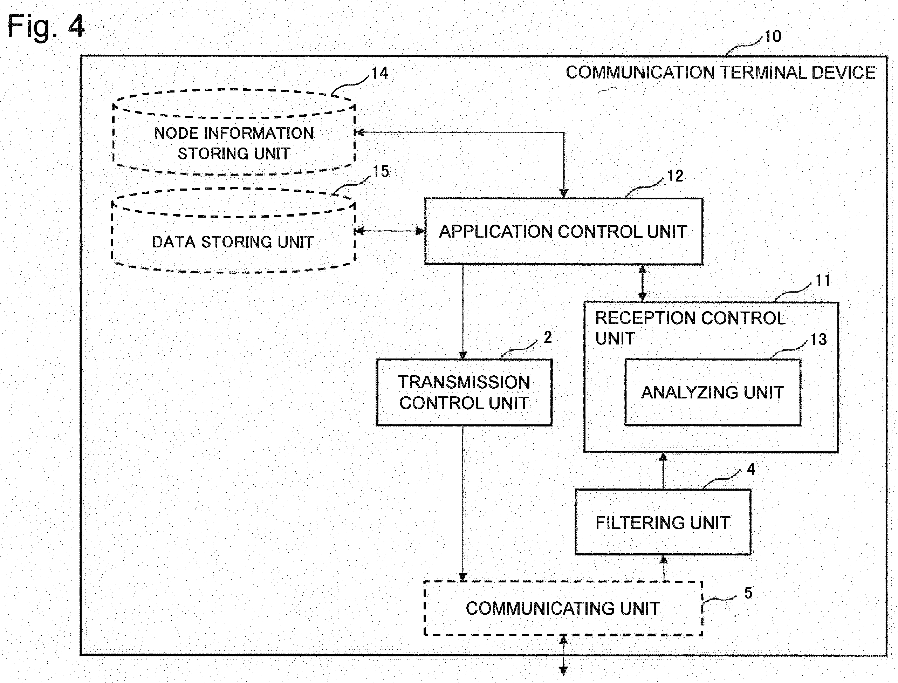

The following describes a communication terminal device 10 according to the second example embodiment of the present invention referring to Figs. 2 and 4.

Fig. 4 is a block diagram illustrating a configuration of the communication terminal device 10 according to the second example embodiment of the present invention.

With reference to Fig. 4, the communication terminal device 10 includes the transmission control unit 2, a reception control unit 11, an application control unit 12, and the filtering unit 4. The reception control unit 11 includes an analyzing unit 13.

The analyzing unit 13 analyzes information included in the first communication information received by the communicating unit 5. Hence, the analyzing unit 13 has a function to determine whether the transmitted first communication information is addressed to a own application (a first application). That is, the analyzing unit 13 analyzes the data header (e.g., the data header 203 in Fig. 2) included in the first communication information received by the communicating unit 5. By analyzing the data header, the analyzing unit 13 determines whether the communication information is addressed to the own application. Alternatively, by analyzing the data header, the analyzing unit 13 may determine whether the communication information is addressed to the multicast group to which the own application belongs (i.e., whether the information is multicast data).

More specifically, the analyzing unit 13 reads the identifier indicating a destination, as written to the data header included in the first communication information. The analyzing unit 13 identifies whether the read-out identifier indicating the destination matches the first identifier 101 (the first application identifier). When the identification results in determining that the identifier indicating the destination matches the first identifier 101, the analyzing unit 13 transmits the first communication information to the application control unit 12.

On the other hand, when the identification results in determining that the identifier indicating the destination does not match the first identifier 101, the analyzing unit 13 discards the first communication information. In other words, when determining that the first communication information is not addressed to the own application, the analyzing unit 13 discards the first communication information.

The following description assumes that, by way of example, multicast identifiers are used as the first and second identifiers 101 and 102.

The analyzing unit 13 reads the identifier indicating the destination, as written to the data header included in the first communication information. The analyzing unit 13 identifies whether the read-out identifier indicating the destination matches the first identifier 101 (the first multicast identifier). When the identification results in determining that the identifier indicating the destination matches the first identifier 101, the analyzing unit 13 transmits the first communication information to the application control unit 12. In other words, when the identification results in determining that the identifier matches the multicast identifier for the multicast group to which the own application belongs, the analyzing unit 13 transmits the first communication information to the application control unit 12.

On the other hand, when the identification results in determining that the identifier indicating the destination does not match the first identifier 101, the analyzing unit 13 discards the first communication information. In other words, when the identification results in determining that the identifier is for the multicast group to which the own application does not belong, the analyzing unit 13 discards the first communication information.

Note that the analyzing unit 13 may be omitted if a unique port number is specified for each of the identifiers (first and second identifiers 101 and 102), as described in the first example embodiment. However, if it is permissible for a plurality of applications to use a overlapping port number, the reception control unit 11 preferably includes the analyzing unit 13.

This enables the analyzing unit 13 to make a final determination as to whether the first communication information is addressed to the own application. Consequently, the communication terminal device 10 can only acquire the first communication information that is addressed to the own application, irrespective of whether the port number (either of the destination port number and reception port number) is shared with any other communication terminal device.

The application control unit 12 has a function to start the process of transmitting second communication information to the specific communication terminal. In addition, the application control unit 12 has a function to save the first communication information received from the specific communication terminal. The application control unit 12 has a function to start the process of setting a reception port number to be used by an application running on the own device (the communication terminal device 10) for receiving the first communication information.

First, for example, upon receipt of a request for transmitting second communication information (a transmission request) sent from a user of the first application, the application control unit 12 starts the process of transmitting the second communication information.

More specifically, the application control unit 12 receives information needed for the transmission process from the user via, for example, the user interface provided by the first application. In other words, the application control unit 12 receives the second identifier 102 for the second application running on the specific communication terminal, which is the destination terminal, along with first information to be included in the second communication information or location information indicating the location where the first information is saved.

If the received information represents such saving location, the application control unit 12 reads, on the basis of the information, the first information from the directory where the first information is saved. The application control unit 12 then transmits the second identifier 102 together with the first information to the transmission control unit 2.

Upon receipt of the first communication information from the application (the second application) running on the specific communication terminal, which is the communication counterpart, the application control unit 12 controls the first communication information so as to save it.

More specifically, the application control unit 12 identifies which of the following information items is represented by the first communication information received from the reception control unit 11:
- a control message controlling the first application;
- node information including the identifier; and
- information intended for information sharing.

If the received information is the control message, the application control unit 12 executes the application processing in accordance with the control message. If the received information is node information, the application control unit 12 transmits the node information to the node information storing unit 14. The application control unit 12 controls the node information storing unit 14 so that the node information is saved.

If the received information is intended for information sharing, the application control unit 12 transmits the information to the data storing unit 15. The application control unit 12 controls the data storing unit 15 so that the information is saved.

The application control unit 12 may adopt a configuration where the determination as to the information type, such as control message, is made on the basis of, for example, the flag that is set in the header field (e.g., the header field 206 in Fig. 2) included in the first communication information. In this case, the flag may be set in any manner as long as the flag can identify the information type, such as control message.

In response to, for example, start-up of the first application, the application control unit 12 starts the process of setting the reception port number to be used by the first application for receiving the first communication information.

More specifically, for example, in response to start-up of the first application, the application control unit 12 transmits the first identifier 101 (the first application identifier) that can identify the first application to the reception control unit 11.

For example, the application control unit 12 may adopt a configuration where the first identifier 101 is obtained by reading the information written to a config file for the first application. Alternatively, the application control unit 12 may adopt a configuration where information about the own device obtained by the first application is taken as the first identifier 101.

Then, the reception control unit 11 can determine the reception port number based on the first identifier 101 that has been received from the application control unit 12. The filtering unit 4 can set the determined reception port number as the reception port number to be used by the first application for receiving the first communication information.

The node information storing unit 14 has a function to save the node information (the application identifier or multicast identifier) obtained from the application control unit 12, as well as a function to read the stored node information.

Upon receipt of the node information from the application control unit 12, the node information storing unit 14 saves the node information.

Upon receipt of a request for reading node information from the application control unit 12, the node information storing unit 14 transmits the node information to the application control unit 12 in accordance with the request. More specifically, upon receipt of, for example, the request for reading the multicast identifier associated with the application identifier, the node information storing unit 14 transmits the corresponding multicast identifier to the application control unit 12.

The data storing unit 15 has a function to save the information intended for information sharing, as provided by the application control unit 12. Upon receipt of such information included in the first communication information that has been provided by the application control unit 12, the data storing unit 15 saves such information. Upon receipt of the request for reading such information from the application control unit 12, the data storing unit 15 transmits the information to the application control unit 12 in accordance with the request.

As seen above, the communication terminal device 10 according to the present example embodiment can further reduce the load associated with a receiving process, in addition to achieving the effect described in the first example embodiment.

This is because the reception control unit 11 further includes the analyzing unit 13, which determines whether the first communication information is addressed to the own application. This enables the communication terminal device 10 can obtain only the first communication information that is addressed to its own application, even when the port number is shared with another communication terminal device. In other words, the communication terminal device 10 can further reduce the load imposed when the relevant application receives the first communication information.

### Third Embodiment

A third example embodiment based on the communication terminal device 10 according to the second example embodiment of the present invention will now be described. The following description focuses on characteristics of the present example embodiment. Duplicate descriptions are thus omitted, with identical reference numbers given to components similar to those in the foregoing example embodiments.

The following describes a communication terminal device 20 according to the third example embodiment of the present invention referring to Figs. 2 and 5 to 10.

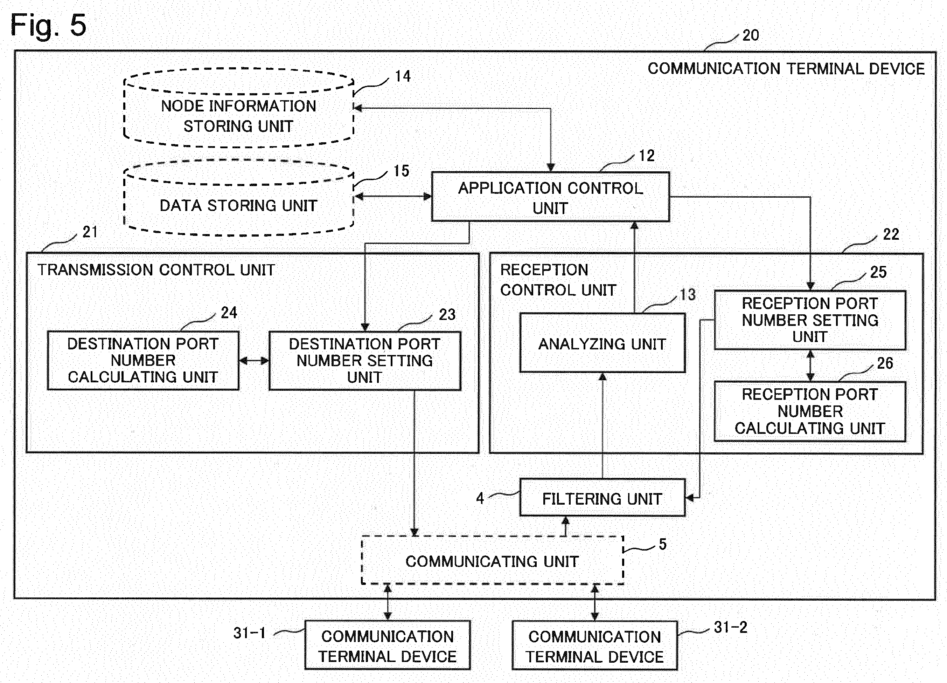

Fig. 5 is a block diagram illustrating a configuration of the communication terminal device 20 according to the third example embodiment of the present invention.

With reference to Fig. 5, the communication terminal device 20 includes a transmission control unit 21, a reception control unit 22, the application control unit 12, and the filtering unit 4. The transmission control unit 21 includes a destination port number setting unit 23 and a destination port number calculating unit 24. The reception control unit 22 includes the analyzing unit 13, a reception port number setting unit 25, and a reception port number calculating unit 26.

Both the destination port number setting unit 23 and the destination port number calculating unit 24 correspond to the transmission control unit 2 described in the first example embodiment. Both the reception port number setting unit 25 and the reception port number calculating unit 26 correspond to the reception control unit 3 described in the first example embodiment.

The communication terminal devices 31-1 and 31-2 each are configured in a similar manner to the communication terminal device 20. For convenience of explanation, descriptions about configurations of the communication terminal devices 31-1 and 31-2 in Fig.5 are omitted.

For convenience of explanation, by way of example, the following describes transmitting and receiving the communication information intended for information sharing referring to Figs. 2 and 5 to 10.

For convenience of and easier-to-understand explanation, the following describes the configuration below as an example. The example configuration focuses attention on communication between the communication terminal device 20 and two (communication terminal devices 31-1 and 31-2) of a plurality of communication terminals in a network. However, example embodiments of the present invention are not limited to such configuration. Depending on the system for building an ad hoc network, the communication terminal device 20 may adopt, for example, a configuration where the device 20 communicates with one or more communication terminal devices.

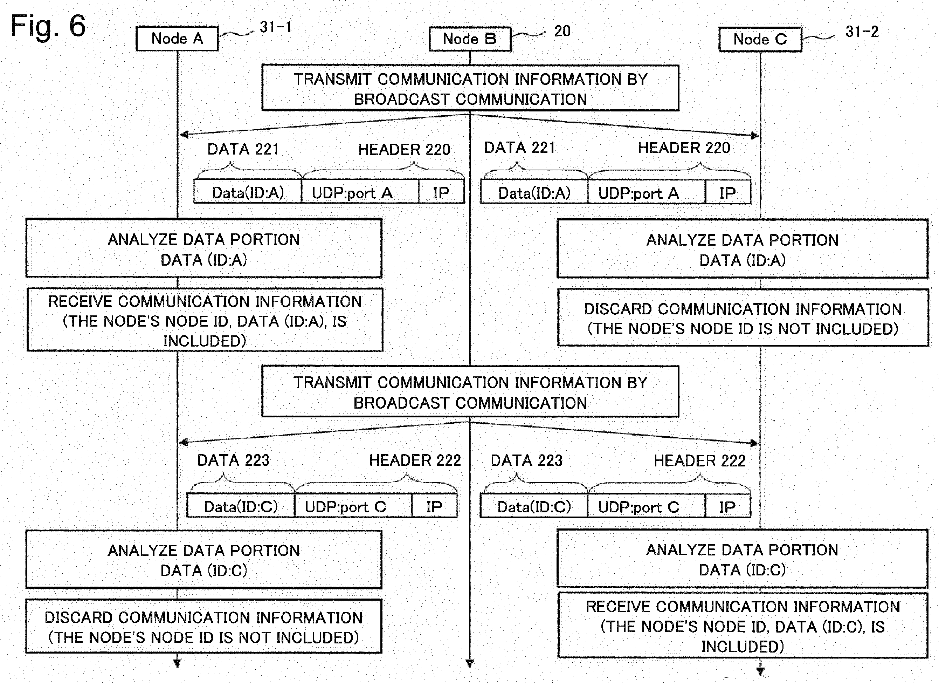

In the following description, the communication terminal device 31-1, which is a first communication terminal, is called "Node_A", while the communication terminal device 31-2, which is a second communication terminal, is called "Node_C", as illustrated in Fig. 6. The communication terminal device 20 is hereinafter called "Node_B".

Fig. 6 is a diagram conceptually exemplifying operations of the individual communication terminal devices according to the third example embodiment of the present invention.

With reference to Fig. 6, Node_B transmits two pieces of communication information to Node_A and Node_C. It is assumed that the communication information transmitted in the first round includes the following information:
- a header field 220 that includes the UDP header to which the destination port number "Port A" is written and the IP header; and
- a data field 221 that includes the application identifier indicating the destination "ID:A".

It is assumed that the communication information transmitted in the second round includes the following information:
- a header field 222 that includes the UDP header to which the destination port number "Port C" is written and the IP header; and
- a data field 223 that includes an application identifier indicating the destination "ID:C".

It is assumed that these pieces of communication information are transmitted by broadcast communication. It is assumed that the communication terminals Node_A to Node_C each can communicate with their adjacent communication terminals only. It is further assumed that the communication terminals Node_A to Node_C each periodically transmit the control message indicating the existence of Node_A to Node_C themselves (the own nodes) to their adjacent communication terminals. In this way, each of the communication terminals Node_A to Node_C recognizes the existence of other communication devices (in other words, recognizes application identifiers for the communication terminals) other than the own node itself.

Node_A to Node_C each can act both as the transmitting terminal transmitting communication information and as the receiving terminal receiving communication information. However, for convenience of explanation, the following description assumes that Node_B is the transmitting terminal while Node_A and Node_C are the receiving terminals.

For convenience of explanation, the following description uses the above-mentioned configuration as an example. However, the present invention illustrated by the present example embodiment is not limited to such configuration.

More specifically, the following describes operations for setting the reception port number according to the present example embodiment.

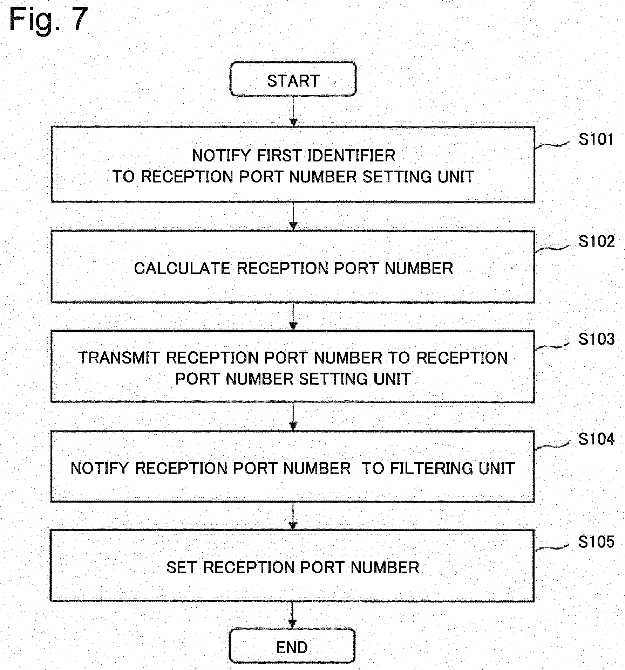

Fig. 7 is a flow chart illustrating operations for setting the reception port number performed by the communication terminal device 20 according to the third example embodiment of the present invention. The operation procedure carried out by the communication terminal device 20 is described below by following the flow chart.

Each of the receiving terminals, Node_A and Node_C, starts the process of setting the reception port number illustrated in Fig. 7, in response to start-up of the application (the first application) running on the respective communication terminals. Since the present operation is intended for information sharing, Node_B also needs to operate as the receiving terminal. It is thus assumed that Node_B also starts the process of setting the reception port number upon, for example, start-up of the application on the communication terminal.

Each of Node_A and Node_C starts the process of setting the reception port number for the own application through the application control unit 12. More specifically, the application control unit 12 obtains the first identifier 101 that can identify the first application by, for example, reading information written to the config file. The application control unit 12 notifies the reception port number setting unit 25 of the obtained first identifier 101 (Step S101).

The reception port number setting unit 25 determines the reception port number through the reception port number calculating unit 26 using the first identifier 101 provided by the application control unit 12. More specifically, the reception port number setting unit 25 transmits the first identifier 101 to the reception port number calculating unit 26. On the basis of the first identifier 101 provided by the reception port number setting unit 25, the reception port number calculating unit 26 calculates the reception port number (Step S102). The reception port number calculating unit 26 transmits the calculated reception port number to the reception port number setting unit 25 (Step S103).

The reception port number setting unit 25 notifies the filtering unit 4 of the reception port number provided by the reception port number calculating unit 26 (Step S104).

The filtering unit 4 makes a setting so as to receive the communication information that includes, in the form of the destination port number, the reception port number provided by the reception port number setting unit 25 (Step S105).

The process of setting the reception port number illustrated in Fig. 7 is now finished.

For convenience of explanation, the reception port numbers for Node_A to Node_C are hereinafter referred to as A, B, and C, respectively. More specifically, the port number like "80" may be assigned to A, B, and C.

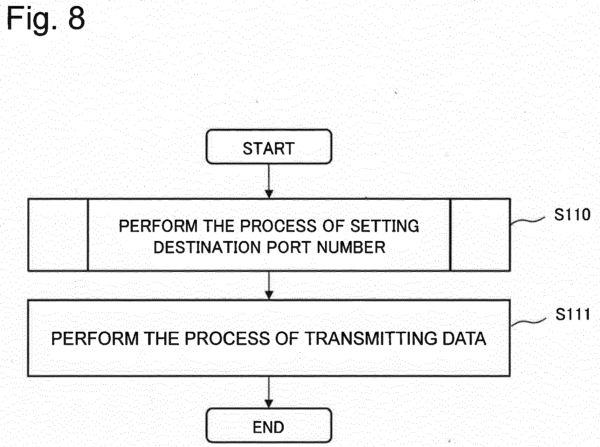

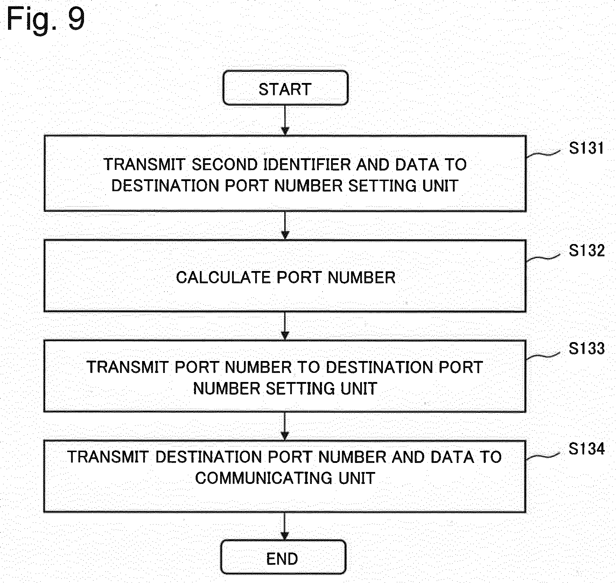

The following describes operations for transmitting communication information according to the present example embodiment more specifically referring to Figs. 8 and 9.

Fig. 8 is a flow chart illustrating operations for transmitting communication information performed by the communication terminal device 20 according to the third example embodiment of the present invention. The operation procedure carried out by the communication terminal device 20 is described below by following the flow chart.

When, for example, the request for transmitting communication information is received from the user, the transmitting terminal, Node_B, starts the process of transmitting the communication information illustrated in Fig. 8 through the application control unit 12.

Node_B starts the process of setting the destination port number (Step S110). Fig. 9 is a flow chart illustrating operations for setting a destination port number performed by the communication terminal device 20 according to the third example embodiment of the present invention.

With reference to Fig. 9, the application control unit 12 receives the second identifier 102 and the first information, where the second identifier 102 identifies the second application running on the destination communication terminal, as indicated by the user through a graphical user interface (GUI) (not illustrated). The application control unit 12 transmits the second identifier 102 and the first information together to the destination port number setting unit 23 (Step S131).

The destination port number setting unit 23 obtains the destination port number through the destination port number calculating unit 24 using the second identifier 102 provided by the application control unit 12.

More specifically, the destination port number setting unit 23 transmits the second identifier 102 to the destination port number calculating unit 24. On the basis of the second identifier 102 provided by the destination port number setting unit 23, the destination port number calculating unit 24 calculates a port number (Step S132). The destination port number calculating unit 24 transmits the calculated port number to the destination port number setting unit 23 (Step S133).

Having calculated the port number, the destination port number setting unit 23 transmits the calculated port number, in the form of the destination port number, to the communicating unit 5. In addition, the destination port number setting unit 23 transmits the first information to the communicating unit 5 (Step S134).

Then, the communicating unit 5 starts the process of transmitting communication information as illustrated in Fig. 8 (Step S111).

More specifically, the communicating unit 5 generates communication information on the basis of the destination port number and the first information provided by the destination port number setting unit 23. That is, the communicating unit 5 transmits communication information in such a way that the destination port number is included in the data header and that the first information can be received by a plurality of communication terminals simultaneously (Step S111).

The process of transmitting communication information illustrated in Figs. 8 and 9 is now finished.

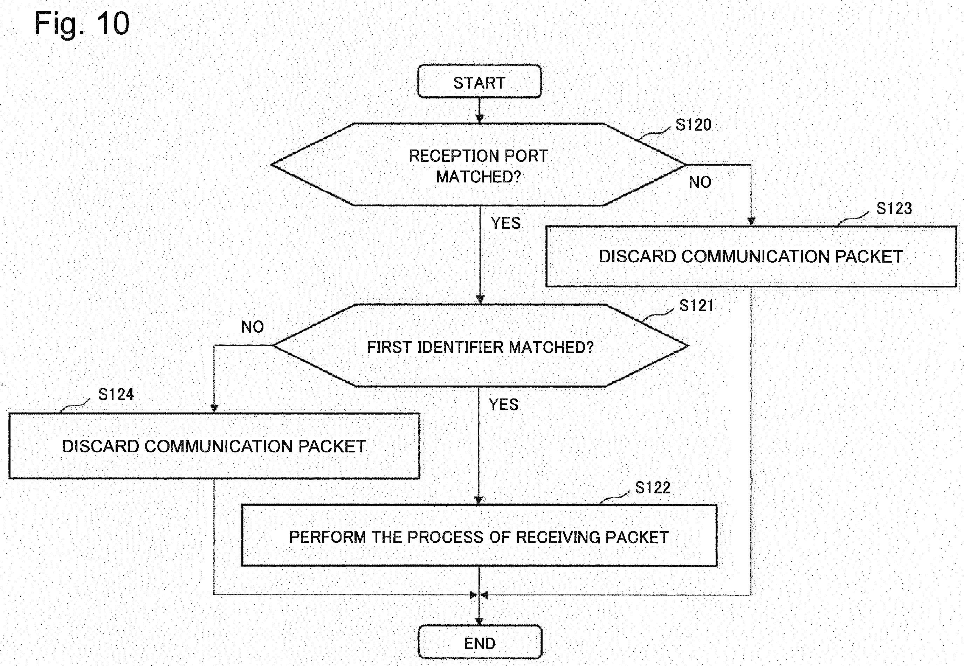

The following describes operations for receiving communication information according to the present example embodiment more specifically referring to Figs. 6 and 10.

Fig. 10 is a flow chart illustrating operations for receiving communication information performed by the communication terminal device 20 according to the third example embodiment of the present invention. The operation procedure carried out by the communication terminal device is described below by following the flow chart.

The receiving terminals, Node_A and Node_C, each start the operation for receiving communication information as illustrated in Fig. 10, when the communicating unit 5 receives the communication information from Node_B.

Through the use of the filtering unit 4, Node_A and Node_C each determine whether to deliver the communication information received by the communicating unit 5 to the first application. In other words, Node_A and Node_C each may perform the process of discarding communication information through the use of the filtering unit 4.

More specifically, the filtering unit 4 checks the destination port number written to the header field (for example, the header field 220 in Fig. 6) in the communication information that has been received from the communicating unit 5. When the checking results in determining that the destination port number (for example, the destination port number 207 in Fig. 2) matches the reception port number assigned to the own device (either of Node_A and Node_C), the filtering unit 4 performs the process of delivering the communication information to the analyzing unit 13 (YES in Step S120).

On the other hand, when the checking results in determining that the destination port number does not match the reception port number assigned to the own device, the filtering unit 4 advances the processing to Step S123 (NO in Step S120). The filtering unit 4 determines that the communication information is not addressed to the own application, and thus discards the communication information (Step S123).

The analyzing unit 13 performs the analytical process of analyzing the data header included in the communication information that has been received from the filtering unit 4.

The following describes the analytical process.

The analyzing unit 13 reads the identifier indicating the destination, as written to the data header included in the communication information. When the analyzing unit 13 determines that the read-out identifier indicating the destination matches the first identifier 101, the analyzing unit 13 transmits the communication information to the application control unit 12 (YES in Step S121). On the other hand, when the analyzing unit 13 determines that the identifier indicating the destination does not match the first identifier 101, the analyzing unit 13 advances the processing to Step S124 (NO in Step S121). The analyzing unit 13 then discards the communication information (Step S124).

For example, if the data header includes the identifier for the application in the own device or the multicast identifier for the multicast group to which the application belongs, the analyzing unit 13 determines that the identifier indicating a destination matches the first identifier 101. The analyzing unit 13 then transmits the communication information to the application control unit 12.

With reference to Fig. 6, the communication information that Node_B transmits in the first round contains the destination port number indicating Node_A as the destination ("UDP:port A" in Fig. 6). Thus, Node_A goes through the above-described processes in Step S120 and S121. Node_A then starts the process in Step S122 illustrated in Fig. 10. On the other hand, for Node_C, the destination port number does not match the reception port number assigned to the own device. Node_C thus discards the communication information in Step S123. Accordingly, the application (the first application) running on Node_C is not notified of the communication information.

With reference to Fig. 6, the communication information that Node_B transmits in the second round contains the destination port number indicating Node_C as the destination ("UDP:port C" in Fig. 6). Thus, Node_A discards the communication information. On the other hand, Node_C goes through the above-described processes in Step S120 and Step S121.

The following describes the process of receiving communication information. For convenience of explanation, the following description assumes that the receiving process is performed by Node_A as an example.

Node_A starts the process of receiving a packet through the use of the application control unit 12. The application control unit 12 receives the communication information from the analyzing unit 13. The application control unit 12 analyzes the data header in the received communication information. That is, the application control unit 12 checks the data header in the communication information. The application control unit 12 performs the process that differs depending on the check result (Step S122).

When the received information is determined to be node information, the application control unit 12 transmits the node information to the node information storing unit 14. The application control unit 12 controls the node information storing unit 14 so that the node information is saved. When the checking results in determining that the received information is intended for information sharing, the application control unit 12 transmits the information to the data storing unit 15. The application control unit 12 controls the data storing unit 15 so that the information is saved. When the received information is determined to be the control message, the application control unit 12 executes the application processing in accordance with the control message.

As a result of the aforementioned operations, each of applications running on their respective communication terminals can receive only the communication information addressed to the application itself. In the case where the information is transmitted to a plurality of communication terminals by multicast, the communication terminal device 20 may perform the aforementioned operations by replacing an application identifier with the multicast identifier.

As seen above, in addition to achieving the effects described in the individual example embodiments, the communication terminal device 20 according to the present example embodiment can efficiently receive and transmit communication information even when communication is made among a plurality of communication terminals. Furthermore, the communication terminal device 20 can reduce the load associated with the receiving process in these communication terminals.

This is because the individual communication terminals can transmit and receive communication information using port numbers obtained as described above. This in turn can prevent applications running on these communication terminals from receiving unnecessary communication information. As a result, the load imposed on such applications can be reduced.

### Example of Hardware Configuration

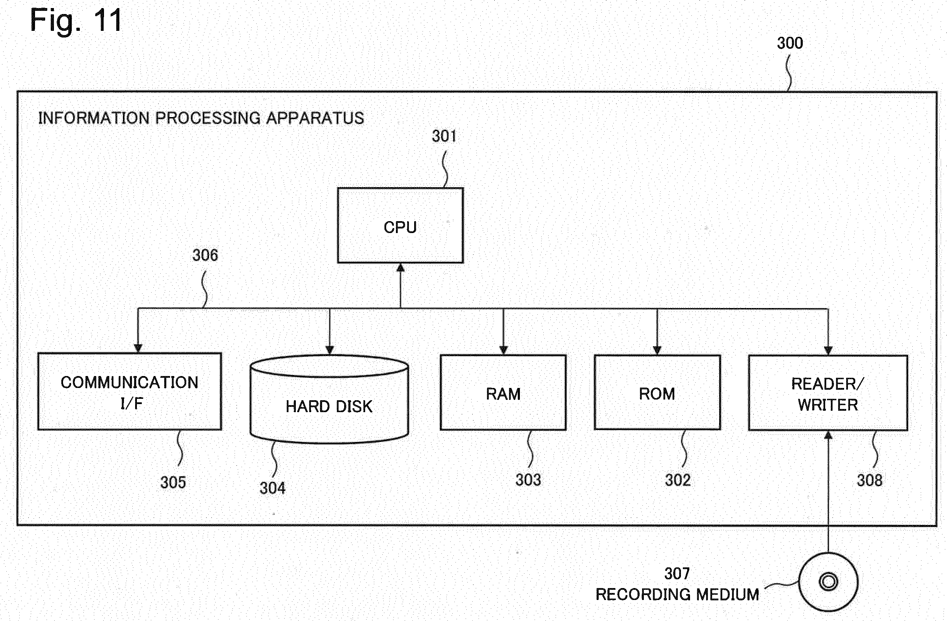

In the above exemplary embodiments, each unit illustrated in the figures can be regarded as a function (processing) unit (software module) of a software program. The individual software modules may be implemented by dedicated hardware pieces. It should be noted that the individual unit separations depicted in these figures illustrate a configuration for explanatory convenience only, and a variety of configurations can be envisaged for implementation. One example hardware environment applicable to such implementation is described below with reference to Fig. 11.

Fig. 11 is an explanatory diagram exemplifying a configuration of an information processing apparatus 300 (computer) which can implement a communication terminal device according to an exemplary embodiment of the present invention. In other words, Fig. 11 illustrates a configuration of a computer (an information processing apparatus), such as a server, representing a hardware environment where the individual functions in the above-described example embodiments can be implemented. The computer can implement, in whole or in part, the communication terminal device 1 (Fig. 1), the communication terminal device 10 (Fig. 4), or the communication terminal device 20 (Fig. 5).

The information processing apparatus 300 illustrated in Fig. 11 is a general computer where the following components are connected to one another via a bus (communication line) 306:

- CPU (Central_Processing_Unit) 301;
- ROM (Read_Only_Memory) 302;
- RAM (Random_Access_Memory) 303;
- Hard disk (storage device) 304;
- Communication interface to an external device (denoted as Communication I/F in Fig. 11) 305; and
- Reader/writer 308 capable of reading and writing data stored in a recording medium 307 such as CD-ROM (Compact_Disc_Read_Only_ Memory).

The present invention explained with the above example embodiments is achieved by the procedure described below. The information processing apparatus 300 illustrated in Fig. 11 is provided with a computer program which is capable of implementing the functions illustrated in the block diagrams (Figs. 1, 4, and 5) or the flow charts (Figs. 7 to 10) referred to in the descriptions of these example embodiments. Then, the computer program is read into the CPU 301 in the hardware and executed, thereby achieving the present invention. The computer program provided to the apparatus may be stored in a readable and writable temporary storage memory (RAM 303) or in a nonvolatile storage device such as the hard disk 304.

In addition, in the case described above, a procedure generally available as of now can be used to provide a computer program to the hardware. The procedure may be, for example, installing the computer program into the apparatus via any of various recording media 307 such as CD-ROM, or downloading it from an external source via communication lines such as the Internet. In such cases, the present invention can be seen as being composed of the codes forming such computer program or being composed of the recording medium storing the codes.

The present invention has been described with reference to example embodiments, but the invention is not limited to these embodiments. Various modifications of the present invention that could be understood by those skilled in the art may be made to configurations or details of the invention within the scope of the invention.

The present application claims priority based on Japanese Patent Application No. 2014-161006 filed on August 7, 2014, the entire disclosure of which is incorporated herein.

### [Reference signs List]

- 1: Communication terminal device
- 2: Transmission control unit
- 3: Reception control unit
- 4: Filtering unit
- 5: Communicating unit
- 10: Communication terminal device
- 11: Reception control unit
- 12: Application control unit
- 13: Analyzing unit
- 14: Node information storing unit
- 15: Data storing unit
- 20: Communication terminal device
- 21: Transmission control unit
- 22: Reception control unit
- 23: Destination port number setting unit
- 24: Destination port number calculating unit
- 25: Reception port number setting unit
- 26: Reception port number calculating unit
- 31-1, 31-2: Communication terminal device
- 101: First identifier
- 102: Second identifier
- 201, 206, 220, 222: Header field
- 202, 208, 221, 223: Data field
- 203, 209: Data header
- 204: Application ID
- 205: Data
- 207: Destination port number
- 210: Multicast ID
- 300: Information processing apparatus
- 301: CPU
- 302: ROM
- 303: RAM
- 304: Hard disk
- 305: Communication interface
- 306: Bus
- 307: Recording medium
- 308: Reader/writer

## Claims

1. A communication terminal device comprising:
reception control means for determining, on the basis of a first identifier that can identify a first application running on a own device, a reception port number for receiving first communication information from a specific communication terminal device, which is a communication counterpart;
filtering means for setting the reception port number obtained from the reception control means as a reception port for the first application; and
transmission control means for determining, on the basis of a second identifier that can identify a second application running on the specific communication terminal device, a destination port number indicating a destination in the specific communication terminal device,
wherein the transmission control means
controls communicating means so that the communicating means transmits, when transmitting second communication information to the specific communication terminal device, the second communication information being different from and other than the first communication information, the determined destination port number and the second communication information.

2. The communication terminal device according to claim 1, wherein the reception control means further comprises:
analyzing means for identifying whether the first communication information is addressed to the first application by analyzing information included in the first communication information, and for discarding the first communication information when the identification results in determining that the transmitted first communication information is not addressed to the first application.

3. The communication terminal device according to claim 1 or 2,
wherein the first and second identifiers each are unique identifiers set for each of applications running on the own device and a plurality of the specific communication terminal devices.

4. The communication terminal device according to claim 1 or 2,
wherein the first identifier is an identifier that can identify a multicast group to which the first application belongs,
and wherein the second identifier is an identifier that can identify a multicast group to which the second application belongs.

5. The communication terminal device according to any one of claims 1 to 4,
wherein the reception port number is a unique reception port number obtained for each of the first identifiers for the own device and a plurality of the specific communication terminal devices on the basis of the first identifier,
and wherein the destination port number is a unique destination port number obtained for each of the second identifiers for a plurality of the specific communication terminal devices on the basis of the second identifier.

6. The communication terminal device according to any one of claims 1 to 5,
wherein the reception port number is a communication port number used by the first application,
and wherein the destination port number is a communication port number used by the second application.

7. The communication terminal device according to any one of claims 1 to 6,
wherein the first communication information and the second communication information each include an identifier indicating the destination, the identifier being contained in a header.

8. The communication terminal device according to claim 2,
wherein the analyzing means identifies whether an identifier that is included in the first communication information and indicates the destination matches the first identifier, and, when the identification results in determining that the identifier indicating the destination does not match the first identifier, discards the first communication information.

9. A transmission and reception method comprising:
determining, on the basis of a first identifier that can identify a first application running on a communication terminal device, a reception port number for receiving first communication information from a specific communication terminal device, which is a communication counterpart;
setting the obtained reception port number as a reception port for the first application;
determining, on the basis of a second identifier that can identify a second application running on the specific communication terminal device, a destination port number indicating a destination in the specific communication terminal device; and
controlling communicating means so that the communicating means transmits, when transmitting second communication information to the specific communication terminal device, the second communication information being different from and other than the first communication information, the determineed destination port number and the second communication information.

10. A recording medium storing a computer program causing a computer to implement the functions to:
determine, on the basis of a first identifier that can identify a first application running on a communication terminal device, a reception port number for receiving first communication information from a specific communication terminal device, which is a communication counterpart;
set the obtained reception port number as a reception port for the first application;
determine, on the basis of a second identifier that can identify a second application running on the specific communication terminal device, a destination port number indicating a destination in the specific communication terminal device; and
control communicating means so that the communicating means transmits, when transmitting second communication information to the specific communication terminal device, the second communication information being different from and other than the first communication information, the determined destination port number and the second communication information.
